# EUROPEAN PATENT APPLICATION

(11) **EP 0 715 462 A1**
(43) Date of publication of application: **05.06.1996**
(21) Application number: 95119978.5
(22) Date of filing: 30.10.1991
(51) Int. Cl.: H04N 7/00, H04N 7/087

(54) **Transmission and/or reception method of data for personal computers**

(30) Priority: 07.11.1990 IT 6787390
(62) Divisional of application: 91118466.1
(71) Applicant: RAI RADIOTELEVISIONE ITALIANA S.p.A., I-00195 Rome (IT); SELECO S.p.A., I-33170 Pordenone (IT)
(72) Inventor: d'Amato, Paolo, I-00195 Roma (IT); Poletto, Maurizio, I-30030 Oriago (VE) (IT)
(74) Representative: Dini, Roberto, Dr. Ing.

(57) **Abstract**

The present invention relates to a transmission and/or reception method of data for personal computers, by means of circular diffusion of radioelectric signals, carried out in teletext settings, in which the data is gathered in files and groups and transmitted according to a telesoftware transmission procedure; the characterising principle of the invention consists in the fact that is provided the possibility of defining a compacting algorithm for the data contained in the files.

## Description

### General

The present invention relates to a transmission and/or reception method of data for personal computers, by means of circular diffusion of radioelectric signals, carried out in teletext settings, in which the data is gathered in files and groups and transmitted according to a telesoftware transmission procedure, comprising a configuration page.

By the term 'file' we mean a data block, for example constituting a computer program, or used as input from a computer program, or representing a written text or illustration.

A system of the type indicated has been described in the European patent application N° 0 306 208.

The principle aim of the present invention is to take full advantage of the channel in use. To allow for such aims, the present invention has as its object a transmission and/or reception method of data for personal computers, by means of circular diffusion of radioelectric signals, carried out in teletext settings, in which the data is gathered in files that are transmitted according to telesoftware transmission system, characterised by the fact that the possibility of defining a compacting method of the data contained in the files is provided for.

Further aims and advantages of the present invention will become clear from the following detailed description and annexed drawings, supplied as a non limiting example, in which:

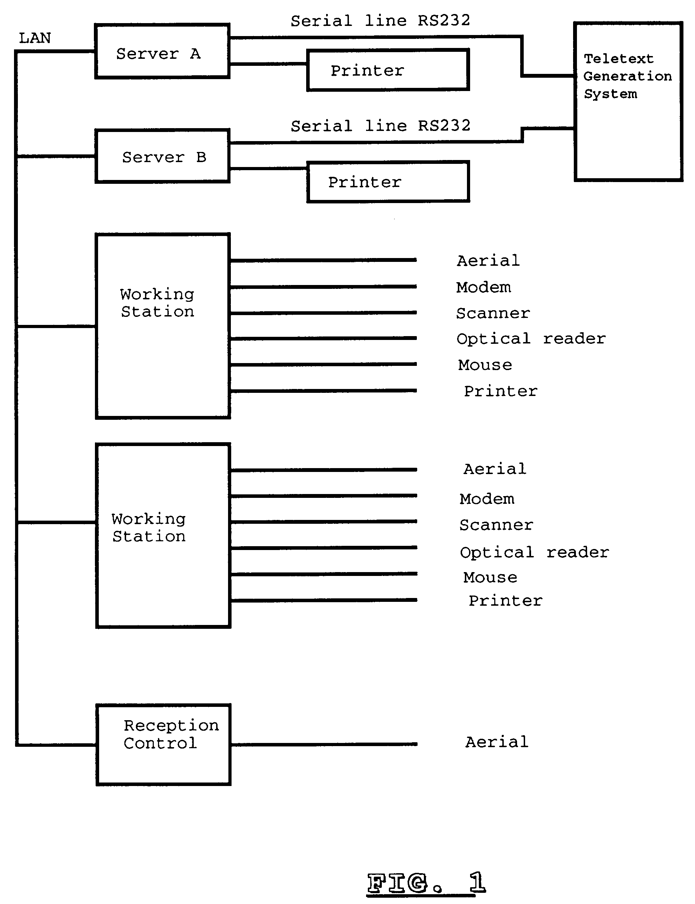

Figure 1 schematically ,represents the configuration of the method implementing a regular data transmission service according to the invention;
Figure 2 represents the block diagram of an interface board that permits a personal computer to directly receive the telesoftware.

The protocol of transmission relative to the present invention will now be described in more detail.

### Detailed description

The protocol of data transmission maintains the same transmission unit (line) and the same structure with regards the pages of the teletext system, used by the Televideo service by the RAI (Radiotelevisione italiana).

The line 0 is not utilised by telesoftware; all of the information is present from line 1 through to line 23. The difference between Televideo and telesoftware lies in the type of information inserted in each single page:
- the information contained in a teletext page is immediately visible on the television screen;
- the information contained in a telesoftware page cannot be immediately utilised, but requires a series of elaborations.

The difference between the pages of teletext and those of telesoftware is that telesoftware pages contain characters of 8 bit without parity; it is therefore possible to transmit both ASCII files and binary files.

The protocol according to the invention does not provide for a corresponding biunivocal file-folder, therefore it is possible to transmit more short files in the same folder, or divide a long file into several folders. This latter possibility is of interest in that the actual integrated teletext decoding circuits allow for the simultaneous search and acquisition of four folders; in taking advantage of this possibility it is possible to reduce to a quarter the time needed necessary for the reception of a file.

The protocol according to the invention provides for two levels of protection of data with regards reception errors. With the lower level of protection, a CRC (cyclic redundancy check) is present in lines through to 23 occupying the last two characters and is utilised in reception for identifying errors; if the control is positive the line is validated, otherwise the terminal awaits the successive transmission of the same page and acquires a second time the lines not being valid.

The protective strategy based on the line CRC has shown itself to be sufficient regarding practical objectives; however the protocol also provides for the possibility of a higher level of protection, so as to assure a good reception even in critical conditions (the probability of 99% of good reception in the first acquisition with error odds being 10-4); for achieving such results the Hamming codes are used along with the line CRC More precisely, each telesoftware line of 40 bytes is divided into 8 code blocks of 5 bytes each; each code block is made up of 4 useful bytes, by 6 bits of Hamming redundancy and by 2 CRC bits; even the CRC bits result in being protected by the Hamming code, that is a shortened code (40, 34).

As errors in reception may be caused by intersymbolic interference, some bit configurations can result in being particularly critical; so as to avoid this the protocol provides for the possibility of masking the data, that is to carry out the exclusive OR of the data itself with a fixed pseudocasual sequence, that is repeated line by line.

This operation, that is carried out on the lines already confectioned, i.e. after the addition of the CRC and the eventual Hamming code, having the effect of destroying the critical sequence, but can, obviously, introduce critical sequences in other positions, therefore the results are effective only if the data is transmitted once masked, once not, or alternatively masked with two different sequences. It is however necessary to introduce in every subpage a byte that identifies the masking pseudocasual sequence, this byte is inserted in the so called 'page heading', transmitted in line 1. The difference with the known protocol is that the new protocol provides for the transmission of information which allows the receiving terminal to automatically produce directories; the index system is of two levels: the files are divided into groups, each of which has its index (group directory); at the higher level the master directory is found. The files contained in a determined group must have similar characteristics, i.e. they must be of the same type (binary or ASCII), for the same operating system and with the same level of protection (only CRC or Hamming + CRC).

The information relative to the master index is contained in the so called configuration page, that is transmitted every cycle; according to the number of groups, the configuration page may be a static one, or a folder of two or more subpages. The telesoftware terminals upon turning on, automatically acquire the page or folder of configuration and, based on the relative information contained, produce the master directory on the screen. At this point the user must select the group of interest, for example moving the cursor to the relative section of the main index. Each group occupies several consecutive folders; the first page of every group can be, according to necessity, a static one, or a folder, containing all the headings of the files that make up the group. When the user has selectioned a group, the terminal automatically acquires the first page of the group and generates, based on the relative information contained within, the group index.

At this point the user can select the file or files that are of interest, for example by moving the cursor along the index and giving the relative acquirement command.

All the telesoftware pages (configuration page, group index page, or normal pages containing data) begin with the page heading, immediately followed by the useful data block.

### Configuration page

This page contains, apart from the information relative to the main index, other important service information.

It is assumed that, for each operative system, a software is realised that manages the reception based on the protocol according to the invention. This software may receive updating, be it for the addition of new functions or for the correction of errors found in the previous versions. The most elegant method of introducing to the receiving terminals a new version of the software is to transmit it via telesoftware, inserting it into one of the groups in transmission; the configuration page contains information, based on which every receiving terminal must, upon turning on, automatically program the acquisition of an eventual version of software received relative to its operative system and more recent than that contained in itself. Considering the present systematic use of compacting algorithms, an analogous mechanism for the automatic signalling of eventual new versions of the software decompacting, transmitted to allow for an automatic downloading to the receiving terminals.

In conclusion, the configuration page contains, apart from its heading, three types of information: group specifics, the specifics relative to the protocol exchange (an abbreviation which means the specifics relative to the channel of the receiving software that implements the protocol), and the specifics of the decompacting software exchange; given the importance of the information contained, the configuration page is always transmitted with the higher level of protection (Hamming + CRC).

The heading contains:
- a byte that determines the presence, or not of masking;
- a rolling index: n/m (2 bytes, that allow for the definition in binary code a folder with a maximum of 255 subpages; in reality the configuration page is almost always static, hence with an index 0/0;
- the so called data of transmission close (a byte, the significance of which will be discussed further on);
- a byte that indicates, in binary, the specific number of protocol change;
- a byte that indicates, in, binary, the specific number of decompacting algorithm.

The heading is followed by the group specifics, that are organised as follows:
- progressive number, that identifies the group (a byte in binary code);
- esadecimal address (2 bytes) from the first page of the group, containing, as mentioned, the information for the group directory;
- esadecimal address (2 bytes) from the last page of the group;
- a byte that indicates the groups characteristics (whether the group name must be visualised in a. fixed way or flashing, whether the group's files are binary or of the text type, whether the level of protection is high or low);
- the type of operative system (one byte);
- current version of the decompacting software (a byte in binary);
- name of the group to be viewed on the screen (18 bytes ASCII).

The group specifications are followed by the change specifications, constituted as follows:
- type of operative system (one byte);
- version number (one byte);
- number of group where a file is present (one byte);
- number of file inside the group (one byte).

The change of decompacting algorithm specifications, that follow the protocol change specifications are organised in the same manner, except for the fact that in place of the byte that defines the operative system the byte that defines the type of algorithm is transmitted.

### Group first page

The heading of the first page of the group is constituted as follows:
- masking (one byte)
- rolling index n/m (two bytes in binary code; this page is also usually static, but can become a folder if the group contains a number of files);
- data of transmission close (one byte, see below)
- number of file headings (one byte in binary).

The page heading is followed by the file headings contained in the group, that are constituted as follows:
- progressive file number (one byte in binary);
- name of file (16 bytes ASCII);
- composition file data (2 bytes, with DOS notation);
- dimension of the file (3 bytes in binary)!
- miscellany (one byte);
- password (6 bytes ASCII);
- link (one byte in binary);
- number of folders in which the file is divided (one byte in binary);
- a group of four bytes for each folder used, that indicate in the order: folder address (2 esadecimal bytes); the numbers o, the first and the last subpage composing the file in object (2 bytes in binary).

Some of the specifications mentioned require several words of comment.

The name of the file is that with which the file itself will be saved, and also comprises the extension; the string begins with a byte indicating the number of characters utilised, for a maximum of 15 characters.

The byte relative to miscellany, a bit that indicates whether the name of the file has been compacted or not, a bit that indicates whether the name of the file is to be viewed in a fixed manner or flashing, an autosave bit and an autorun bit; the other bits are reserved for future applications.

The password can be constituted by six spaces: this means that the file is receivable by everyone; on the contrary the filed is destined o users that know the password.

Link: an important characteristic of the new protocol is the possibility of defining a packet of files that have to be received jointly. Only files of the same group can be joint together; in practice, the link byte is the identifying number of the file that constitutes the successive ring of the chain; the last file of the chain points towards the first. To receive the complete packet it is necessary to simply ask for the acquisition of any file of the chain; obviously the files that do not take part of a packet point to themselves.

### Data pages

These are normally subpages, containing a data block belonging to a file. Even if the same folder may contain more files, it is agreed upon for simplicity sake that the data of two different files can not coexist in the same subpage. Consequently, the last subpage of a file will contain, generally, stuffing bytes, that are spaces. Such bytes are identifiable by the receiving software by a simple calculation, in that the file heading indicates its length, and every subpage contains a fixed number of bytes, having the page heading of a fixed length.

Precisely, if the high level of protection is applied, 32 x 23 bytes are available in every page, from which it is necessary to deduct the 6 bytes of the heading for a total of 730; with the lower level of protection the useful bytes become 38 x 23 - 6=868.

The structure of the page heading is the following:
- masking (one byte);
- rolling index (2 bytes in binary);
- data of transmission finish (see below);
- block index i/K (2 bytes).

It is to be noted that the block index consists of a progressive numeration of the blocks from which the file is divided, even belonging to different folders, and this is an aid for the receiving software in, the phase of reconstructing the files. In the particular case in which a file is transmitted in a sole folder, evidently the rolling index and the block index coincide.

### Data of transmission close

In the heading of all the pages a byte has been introduced, called transmission close, the utility of which is apparent when changes in the transmission are carried out during the day. If a file is cancelled or substituted with another, the terminals that were acquiring it may behave in an abnormal manner if the alteration is not appropriately pointed out; moreover, the user may have problems in understanding the reasons of the abnormality.

To resolve this problem the following strategy has been adopted. The flag of transmission close, contained in the configuration page is raised a determined time, let us say x minutes (typically quarter of an hour), before a change that involves the main index. Similarly, the flag contained in the first page of a determined group is raised x minutes before a change involving that determined group. These flags are then reset once the changes have occurred.

The receiving software can take advantage of these flags for installing in the indexes, subject to change, a notice that warns the user to pay attention; if the user, after having referred to an index containing the notice, decides to attempt, all the same, to acquire a file, is aware of the fact that the acquisition may not be carried through.

The flags contained in the subpages of the files allow for the evaluation of the validity of an acquisition; such flags have a different kind of management, that of the flip-flop kind, and therefore must have the same value in all the subpages of a determined file. If after a while, subpages with opposite flags are received, this means that the file being acquired has been substituted by a new one and therefore the acquisition is not valid.

A different strategy could also be used; for example, the total number of programs available via telesoftware could be distinguished on the basis of the contents heading transmitted only in certain hours of the day. The teletext pages, that describe the telesoftware service, would supply all the information relative to the said contents heading; it would be possible, when desired, to add to the file heading the hour in which transmissions start and finish, something that would render useless the change signalling mechanism previously described. This and other modifications can be provided at any moment, taking advantage of the software's reception downloading mechanism previously described.

### Particular

Several particulars of the new described protocol are herein emphasised:
- the possibility of sending updates of the protocol itself;
- the possibility of compacting the files, with the aims of optimising the exploitation of the transmission channel;
- the possibility of defining the compacting algorithm;
- the possibility of defining links between the files, so as to allow the terminals automatically acquisition of a packet of linked files;
- the possibility of the configuration page containing data allowing the terminal to automatically generate the main index; the fact that the headings of the files of each group are concentrated on the first page of the group itself; upon selection of a group by the user, the terminal automatically acquires the first page and presents the group index on the screen;
- having concentrated all the file headings on the first page of each group simplifies the structure of the subpages of the folders containing the files;
- with the aims of introducing a further simplification, each subpage contains data referring to one file only, even in the case in which a folder contains a number of files; since the page heading is of a fixed length, length of the data zone is fixed, for which the division of tiles into blocks (each being allocated in a subpage) results in being much easier and, above all, independently from the way in which the file is transmitted (by itself in a single folder, along with other files in a single folder, or distributed in a number of folders);
- on the configuration page, on the first page of each group and on every subpage of the folders containing files, transmission closing flags have been introduced; this allows the possibility of changing the files transmitted during the day without disturbing the functioning of the receiving terminals.

### Transmission

So as to provide a better comprehension of the invention, the configuration proposed for the preparation and transmission of a regular telesoftware service as according to the invention, will be described with the help of the drawing, underlining the fact that an example is simply being dealt with and that, consequently, other configuration apparatus may be used.

The enclosed figure represents a simplified block drawing of the system, constituted by a local area network (LAN) of personal computers, having the following functions:
- A pair of computers (computer direction) are used for the transmission, also acting as servers, i.e. managing the mass support utilised also by the other computers of the network. Such a pair of computers are connected to the teletext generating system.
- Other computers (work stations) are utilised by computer programmers for preparing files, or by the system manager for defining the total number of programs available and activating the transmission through commands communicated to the computer direction.
- A computer for verifying the transmission.

The two PC servers A and B are indicated in the figure, furnished with a serial line RS 232 for the connection with the central computer that manages the teletext service. One of the two "master" is usually working "master", whilst the other constitutes the "slave" or back up, and shall be of the "lot" type, i.e. comprising a watch dog automatic commutation circuit for identifying breakdowns.

The work stations may be of a variable number, with regards to the activity carried out (two of which being indicated in the figure).

The work stations, user/manager, are utilised, as said, by computer programmers for the preparation and verifying of the files, and by the system manager for the definition of the total number of programs available; therefore it must be possible, from such work stations, to transmit files and transmission instructions towards the file server.

It is considered to be of use the separation of the two functions "user" and "system manager" by means of appropriate passwords. Apart from the password it is also considered useful the introduction of user identification.

The work stations shall have many peripherals, so as to allow the computer programmers the acquisition of various data. In particular, it is considered to be of use a scanner for the acquisition of graphics, an optical reader for the acquisition of written text and an optical disc. It is also advisable the connection, via the telephone network or ITAPAC, with external data banks (here a modem is necessary).

Connected by means of LAN to the computers of the network a reception device is provided for verifying the files transmitted. Such a device is indicated in the figure as the reception control, and is constituted of a computer supplied with telesoftware interface with video input in high and low frequency; it receives from the PC server of computer direction the information relative to the files in transmission; it comprises a software that automatically manages the reception of said files and sends them to the computers of the computer direction: these, in abnormal cases, for example a non perfect coincidence of a file in transmission with that memorised in the server, sends messages of advice, of errors and of alarm to predisposed suitable devices.

A main program is run on the computers of the computer direction, which coordinates the realisation of the total number of programs available, managing numerous automatic functions.

Such functions, for example can be the following:
- Compilation of the configuration page.
- Compilation of the pages of the groups: transforms all the files belonging to a data group into telesoftware pages, composes the first page, containing the file headings of the group.
- Transfers all the telesoftware pages composed in the teletext generation system.
- Controls reception: sends instructions to a suitable PC and compares files received with the original ones.
- Manages an historic file of the files in transmission.

The manual functions can be however the following:
- Acquisition of user files, along with relative heading parameters and insertion in a suitable library (source library).
- Consultation of the source library:
- Compilation of the total number of programs available (definition of all the operations to be carried out in the various sessions of transmission).
- Consultation of the historic file.
- Management of the password list.
- Procedure of manual transmission (to be used in cases of emergency, in cases where the automatic procedure does not work).

### Reception

The domestic receiving part of the system will now be described. The receiving terminal can consist of a television set comprising a suitable data output serial port that permits the connection with a personal computer; or, preferably, the terminal can consist of a personal computer or a home computer, comprising a suitable circuit board allowing for the direct reception of the telesoftware.

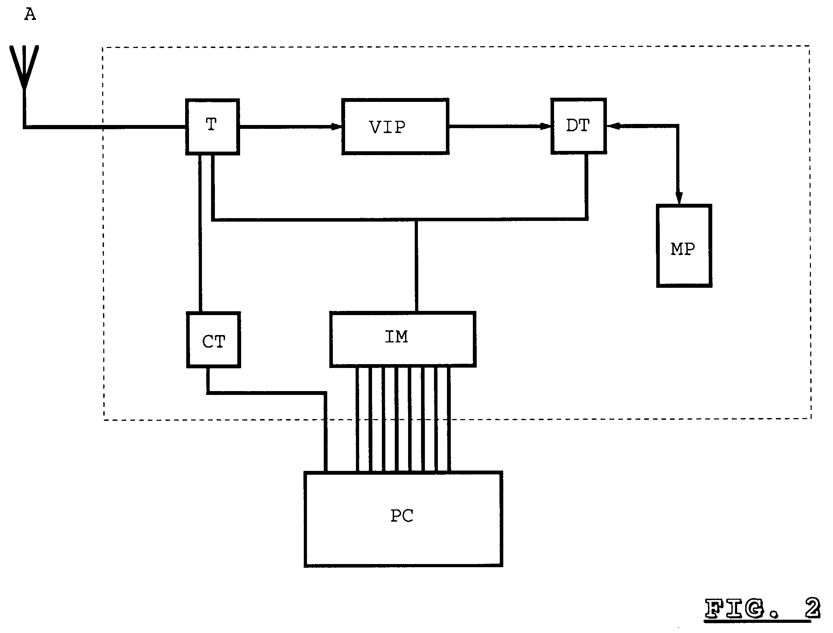

Figure 2 represents a block drawing of a realisable example of said circuit board.

In the figure the letter A indicates a television receiving antenna; the television signals intercepted by this are passed to a tuner (T), of a conventional type, for example a synthesiser frequency tuner, that allows for the tuning of television channels from both the VHF range and the UHF range. The tuner also comprises an amplifying circuit of intermediate frequency and a video detector, according to recent television technology; the tuner supplies in output a base band video signal, relative to the tuned channel; such signal reaches the video input processor, that provides for, in a known way, the extraction of the teletext data associated to the received television program from the video signal.

Said teletext data reach the teletext decoder (DT), that decodes the signals received, composes the teletext pages according to commands received (see following), and is able to memorise up to four pages in the page memory (MP).

The decoder comprises 4 reception banks, completely separated and independent; it is therefore possible to receive up to 4 teletext pages simultaneously, taking full advantage of the above described characteristics relative to the protocol according to the invention; the reception process is greatly improved so as to obtain the maximum reception speed.

The commands reaching the decoder DT from the principle microprocessor of the personal computer (PC), through an interface (IM), that provides for the conversion of logic signals coming from the parallel port of the personal computer to serial signals, that, through the internal serial bus of the circuit board (IB), control the tuner T and the decoder DT.

In this way the personal computer can manage the functioning of the circuit board's two components, and is able to analyse, by means of the decoder itself, the data contained in the memory MP.

The block designated CT represents a voltage converter, that adapts the input voltage, available on the slot of the computer, to the needs of the tuner T.

Clearly the software of the personal computer must comprise an initial program, according to the protocol described above, to which the telesoftware will be implemented, so as to acquire, by means of the circuit board in figure 2, the telesoftware that manages the data received, of which, every terminal must, upon turning on, automatically program the acquisition, if the version in possession precedes the version in transmission naturally the above is also valid for the eventual acquisition of new versions of decompacting software.

According to the above, the computer will be able to visualise on the screen of the relative monitor the main index of the telesoftware transmitted, and, as soon as the user has selected the group of interest, for example moving the cursor to the section of the main index, the index group chosen, the user at this point can select the file or files that he considers interesting, for example moving the cursor along the index and giving the relative acquisition command, so as that the subpages contained in that file or files are transferred, from the memory MP of the circuit board, to the computer's main memory.

The reconstruction of the files, obtained composing the various blocks transmitted on the subpages, occurs inside the personal computer.

The characteristics of the method described become clear from the present description. The inherent advantages of the method object of the present invention also become clear.

It is clear that numerous variants, to the method described as an example, are possible by the man of the art, without however departing from the novelty principles inherent to the invention.

## Claims

1. Transmission and/or reception method of data for personal computers, by means of circular diffusion of radioelectric signals, carried out in teletext settings, in which the data is gathered in files and groups and transmitted according to a telesoftware transmission procedure, characterised by the fact that is provided the possibility of defining a compacting algorithm for the data contained in the files.

2. Transmission and/or reception method of data for personal computers, according to claim 1, characterised by the fact that the protocol provides the possibility of identifying, and therefore to change at any moment, the data compacting algorithm.

3. Transmission and/or reception method of data for personal computers, according to claim 2, characterised by the fact that a configuration page is provided, containing information that permits the receiving the terminal automatic acquisition of new versions of the decompacting software.

4. Transmission and/or reception apparatus for the transmission and/or reception method according to one or more of the preceding claims.
